Europäisches Patentamt

European Patent Office

Office européen des brevets

(11) Veröffentlichungsnummer: **0 396 805**
**A1**

## (12) EUROPÄISCHE PATENTANMELDUNG

(21) Anmeldenummer: **89108518.5**

(22) Anmeldetag: **11.05.89**

(51) Int. Cl.5: **G21C 5/06, G21C 3/32,**
**F16B 13/12**

(43) Veröffentlichungstag der Anmeldung:
**14.11.90 Patentblatt 90/46**

(84) Benannte Vertragsstaaten:
**AT CH DE LI NL**

(71) Anmelder: **Siemens Aktiengesellschaft**
**Wittelsbacherplatz 2**
**D-8000 München 2(DE)**

(72) Erfinder: **Gruber, Nikolaus**
**Am Europakanal 2**
**D-8520 Erlangen(DE)**
Erfinder: **Kunz, Rainer**
**Kronacherstrasse 5**
**D-8500 Nürnberg(DE)**
Erfinder: **Zenkel, Martin**
**Neuhauserhaupstrasse 39a**
**D-8555 Adelsdorf(DE)**

(54) **Stift und Werkzeug zur Verankerung in einer Bohrung einer Platte oder Wand.**

(57) Stift und Werkzeug zur Verankerung in einer Bohrung einer Platte oder Wand

An dem zu verankernden Ende des Stiftes (1), der z.B. als Zentrierstift für Brennelemente dient, ist ein quer zu seiner Längsachse verlaufender Ausschnitt (2) mit trapezförmigem Querschnitt vorgesehen, In dem Ausschnitt ist ein Keil (5) angeordnet, welcher über einen Faltsteg (6) mit dem Stift (1) verbunden ist. Dem Keil (5) ist ein Dorn (9) zugeordnet, der in eine koaxiale Bohrung (8) des Stiftes (1) von dessen freiem Ende her einführbar ist. Mittels eines Werkzeuges wird über den Dorn (9) eine Kraft auf den Keil (5) im Sinne eines Ausstellens und Verankerns von zwei durch den Ausschnitt (2) gebildeten Flanken (3, 4) übertragen.

FIG 1

EP 0 396 805 A1

## Stift und Werkzeug zur Verankerung in einer Bohrung einer Platte oder Wand

Die Erfindung bezieht sich auf einen Stift und ein Werkzeug zur Verankerung in einer Bohrung einer Platte oder Wand und ist insbesondere anwendbar für Stifte zum Zentrieren von Brennelementen in Reaktordruckbehältern.

Es ist bekannt, Stifte auf eine Platte stumpf aufzusetzen und mit dieser zu verschweißen. Bei einer anderen bekannten Ausführung werden Stifte in eine Bohrung einer Platte eingeführt und an ihrer Rückseite verschraubt, umgenietet oder durch Stemmkanten gesichert.

Bei Reaktordruckbehältern ist es bekannt, in einer Gitterplatte des oberen Kerngerüstes Zentrierstifte anzubringen, die Brennelemente in ihrer Quer- und Drehlage fixieren. Dabei sind die Zentrierstifte der Brennelemente im oberen Kerngerüst an der Innenseite der Gitterplatte verschraubt und verschweißt und von dieser Seite her nur schwer zugänglich. Beim Austausch eines Zentrierstiftes muß die Schweißnaht und die Mutter entfernt werden. Dies wird dadurch bewerkstelligt, daß die Mutter mit dem Teil des Gewindebolzens, auf den sie aufgeschraubt ist, mittels Funkenerosion abgetrennt wird.

Der Erfindung liegt die Aufgabe zugrunde, einen einteiligen Stift anzugeben, der bei Erzielung einer hohen Haltekraft in kürzerer Zeit als bisher in einer Bohrung einer Wandfläche oder einer Platte, die nur von einer Seite aus zugänglich ist, verankert und gegebenenfalls wieder gelöst werden kann.

Diese Aufgabe wird erfindungsgemäß durch einen Stift, insbesondere Zentrierstift für Brennelemente, gelöst, dessen eines Ende unte Bildung zweier Flanken mit einem quer zu seiner Längsachse verlaufenden, trapezförmigen Ausschnitt versehen und in einer Bohrung einer Wand oder Platte verankerbar ist, wobei im trapezförmigen Ausschnitt ein Keil angeordnet ist, welcher über einen Faltsteg mit dem Stift verbunden ist, und dem Keil ein Dorn zugeordnet ist, der in eine koaxiale Bohrung des Stiftes von dessen freiem Ende her einführbar ist, um mittels eines Werkzeuges über den Dorn eine Kraft auf den Keil im Sinne eines Ausstellens und Verankerns der Flanken in der Bohrung zu übertragen.

Auf diese Weise ist es möglich, den Stift von der leicht zugänglichen Außenseite der Wand oder Platte in eine Bohrung einzusetzen und gegen Lösen und Herausfallen zu sichern. Beim Entfernen des Stiftes ist es nicht erforderlich, aufwendige Verfahren, wie z.B. ein Funkenerosionsverfahren, vor Ort anzuwenden, da es möglich ist, einen eingepreßten Stift durch Anwendung einer größeren Zugkraft wieder zu ziehen. Beispielsweise ist zum Verankern eines Stiftes mit einem Durchmesser von 15 mm mittels eines hydraulischen Werkzeuges eine Druckkraft von 1,5 t auf den Dorn ausgeübt worden. Um diesen mit Spielsitz verankerten Stift wieder auszuziehen, wurde eine Zugkraft von ca. 2,8 t benötigt.

Zur Erzielung einer sicheren Verankerung ist es zweckmäßig, die Flanken an der Mantelfläche mit Erhebungen zu versehen. Diese Erhebungen können als radiale Rippen oder Noppen ausgebildet sein. Dabei wird die Verankerung durch Spreizen der am Ende des Stiftes angebrachten Flanken und Eindrücken der Erhebungen in die Wand der Bohrung erzielt.

Beim Einsatz des Stiftes als Zentrierstift für Brennelemente ist es vorteilhaft, als Werkstoff für den Stift Edelstahl zu verwenden und die Mantelflächen und/oder die Erhebungen mit einer Detonationsbeschichtung zu versehen, um ein sicheres Eindringen in den Werkstoff der Platte zu gewährleisten. Wird der Stift aus Stahl gefertigt, so können zu mindest die Erhebungen oder auch die Mantelflächen nach einem üblichen Verfahren gehärtet werden.

Der Dorn wird zweckmäßigerweise zylindrisch ausgebildet und ist gehärtet. Er wird nach dem Verankern des Stiftes wieder ausgezogen, während der Keil, der durch den Faltsteg in jeder Position gehalten wird, Teil des Stiftes ist.

Es ist günstig, wenn der Reibwinkel des Keils zumindest annähernd im Bereich der Selbsthemmung liegt. Dabei gewährleistet der Faltsteg nicht nur eine Unverlierbarkeit des Keiles, sondern er erschwert auch ein Zurückschieben bei Erschütterungen (Vibrationen).

Bei einem Werkzeug zum Verankern des Stiftes ist eine an der Platte oder Wand über Spannelemente festklemmbare Zentrierplatte mit einem Gestell vorgesehen, an dem ein erster Zylinder befestigt ist, dessen Kolben über eine Kolbenstange mit einem zweiten Zylinder und einer daran angeordneten Hülse zur Aufnahme des Stiftes und einer auf das Stiftende aufsetzbaren, in der Hülse verschiebbaren Haube verbunden ist, durch die der im Stift angeordnete Dorn hindurchgeführt und mit einer Kolbenstange eines im zweiten Zylinder angeordneten Kolbens in kraftschlüssige Verbindung gebracht ist.

In der Zeichnung sind Ausführungsbeispiele der Erfindung dargestellt. Darin zeigen:

FIG 1 einen in eine durchgehende Bohrung einer Platte eingeführten Stift im Halbschnitt,

FIG 2 eine Ansicht eines Endes des in FIG 1 gezeigten Stiftes in verankerter Stellung,

FIG 3 einen anderen Stift im Längsschnitt und

FIG 4 eine schematische Darstellung eines Werkzeuges zum fernbedienten Verankern eines als Zentrierstift dienenden Stiftes in einer Sacklochbohrung einer Platte im oberen Kerngerüst eines Reaktordruckbehälters.

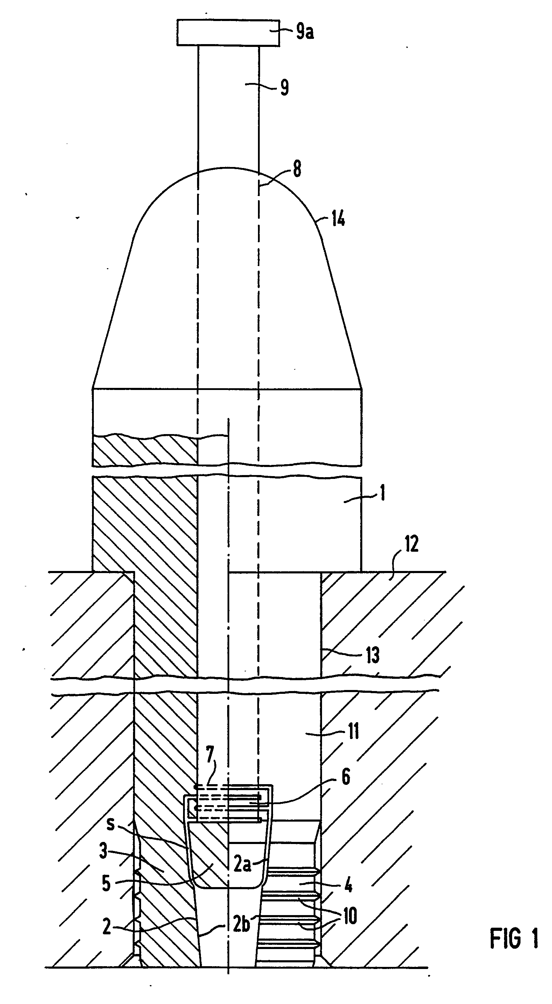

In FIG 1 ist mit 1 ein Stift aus Metall bezeichnet, der eine zylindrische Gestalt mit abgerundetem freien Ende 14 hat. An dem zu verankernden Ende 11 ist er zur Bildung einer Abstützung an der Öffnung einer Bohrung 13 mit einem quer zu seiner Längsachse verlaufenden Ausschnitt 2 mit trapezförmigem Querschnitt versehen. Dadurch werden zur Verankerung des Stiftes in der Bohrung 13 einer Wand oder Platte 12 zwei ausstellbar Flanken 3, 4 gebildet. Im trapezförmigen Ausschnitt 2 ist ein Keil 5 angeordnet, der über einen Faltsteg 6 an der Grundseite 7 des trapezförmigen Ausschnittes 2 mit dem Stift 1 verbunden ist.

Der Keil 5 und der ihn mit dem Stift 1 verbindende Faltsteg 6 sind aus dem Stift 1 herausgearbeitet. Dies kann mittels eines Laserstrahls oder eines Funkenerosionsverfahrens geschehen. Dabei kann die Elektrode als Formelektrode oder als Drahtelektrode ausgebildet sein. Auf diese Weise bilden der Sicherungskeil 5 und der Stift 1 eine Einheit, bei der der Keil 5 durch den Faltsteg 6 in jeder Position, also vor, während und nach dem Verankern unverlierbar gehalten wird.

Der Stift 1 wird mit dem zu verankernden Ende 11 in eine durchgehende Bohrung 13, insbesondere eine Paßbohrung, der Platte 12 aus Metall eingesetzt.

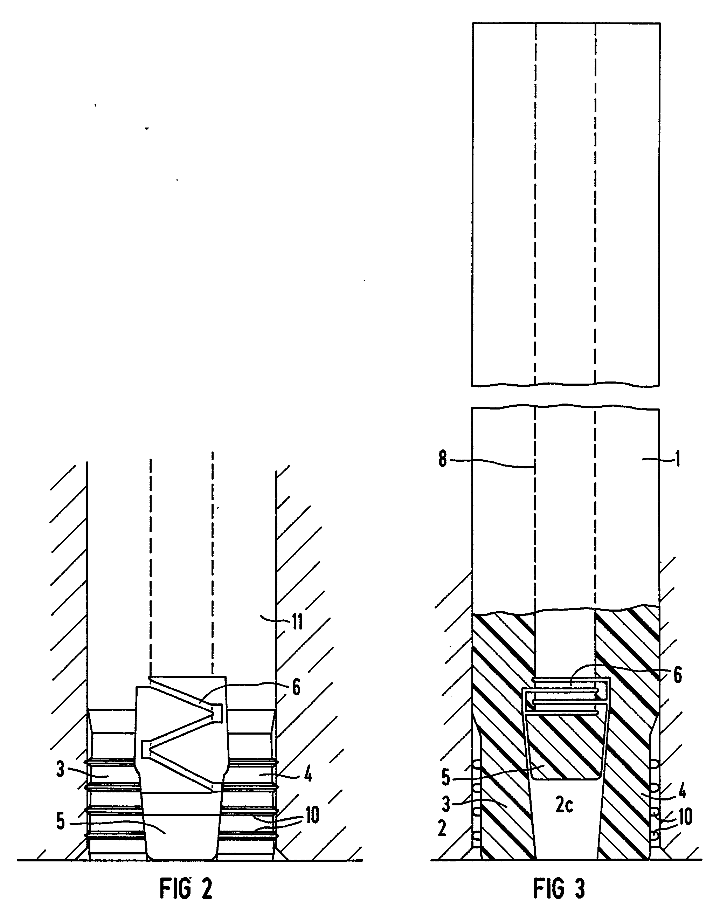

Um zum Verankern des Stiftes 1 die Flanken 3, 4 auszustellen, ist dem Keil 5 ein Dorn 9 zugeordnet, der in eine koaxiale Bohrung 8 vom freien Ende des Stiftes 1 her einführbar ist. Die Flanken 3, 4 des Stiftes 1 haben an ihrer Mantelfläche Erhebungen 10, die als Rippen ausgebildet sind. Durch Ausüben einer Kraft auf den Dorn 9, z.B. mittels eines Hammers, wird der Keil 5 in eine Lage gebracht, in der die beiden Flanken 3, 4 gespreizt sind (FIG 2).

Es ist günstig, wenn die beiden nicht parallelen Seiten 2b des Trapezes über der Keilspitze gegenüber den Seiten 2a um die Schnittbreite s parallel nach innen versetzt sind. Dadurch kann der Weg des Keiles beim Verankern, bis er die Flanken wirksam nach außen drückt, wesentlich verkürzt werden.

Damit beim Verankern die Erhebungen 10 an der Mantelfäche der Flanken 3, 4 besonders tief in den Werkstoff der Platte 12 aus Metall eindringen, ist der Stift 1 aus Stahl und zumindest die Erhebungen 10 oder auch die Mantelflächen sind gehärtet. Der Reibwinkel liegt dabei unter 5˚.

Vorzugsweise ist der Stift 1 an seinem Endteil, an dem die Flanken 3, 4 angeordnet sind, in der Weise verjüngt, daß sein Durchmesser einschließlich der Erhebungen 10 gleich groß oder kleiner als der Durchmesser des ubrigen in der Bohrung zu verankernden Endes 11 des Stiftes 1 ist.

FIG 3 zeigt einen Stift 1 aus Kunststoff, der in eine Sacklochbohrung 13 einer Wand einführbar und dort verankerbar ist. Dieser Stift 1 hat eine durchgehende zylindrische Gestalt und ist bis zum Anschlag in der Sacklochbohrung einführbar. Das zu verankernde Stiftende 11 hat einen trapezförmigen Ausschnitt 2 mit geraden Seiten 2c, in dem ein über einen Faltsteg 6 angearbeiteter Keil 5 angeordnet ist. Die Flanken 3, 4 sind an der Mantelfläche mit als Noppen ausgebildeten Erhebungen 10 versehen, die in den Werkstoff der Platte 12 gedrückt werden und auf diese Weise eine besondere Sicherung gegen Lösen und Herausziehen des Stiftes 1 aus der Bohrung 13 bilden.

Der Keil 5 und der Faltsteg 6 bilden mit dem Stift 1 eine Einheit und können beispielsweise nach einem Spritzgußverfahren hergestellt sein.

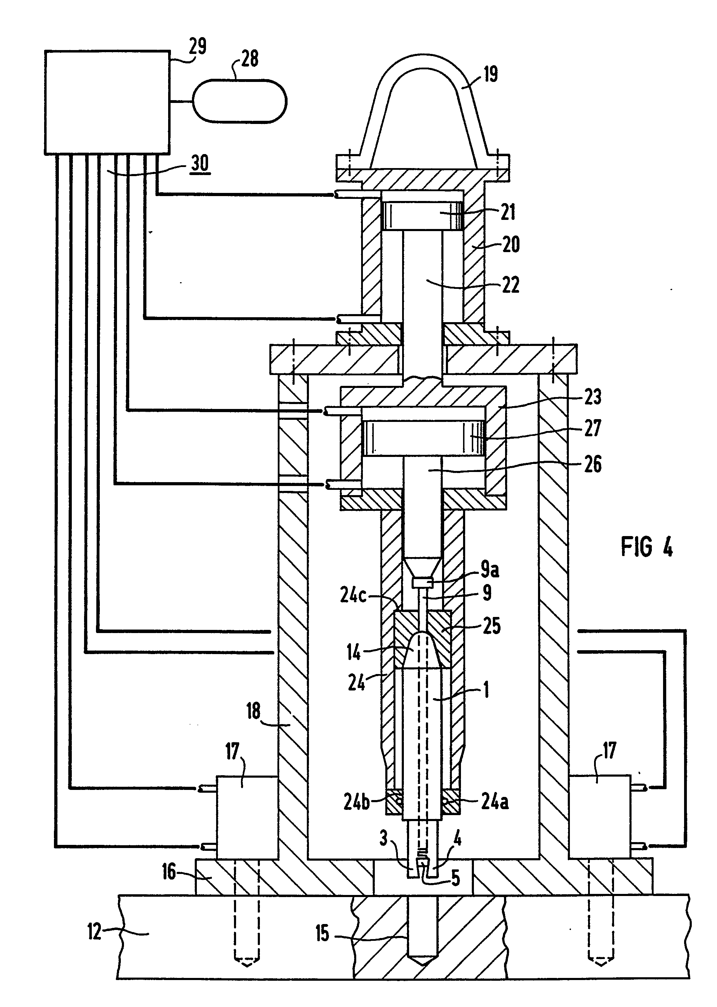

FIG 4 zeigt ein Werkzeug zum Befestigen eines als Zentrierstift für Brennelemente ausgebildeten Stiftes 1 in einer Sacklochbohrung 15 einer Platte 12 aus Metall. Diese Platte 12 ist die Gitterplatte eines GerüsteinSatzes für Reaktoreinbauten. Das Werkzeug hat eine Zentrierplatte 16, die mittels hydraulisch betätig barer Spannelemente 17 an der Platte 12 aus Metall in an sich bekannter Weise festgeklemmt wird. Die Zentrierplatte 16 ist mit einem Gestell 18 verbunden, das einen Einhängebügel 19 für ein nicht dargestelltes Hebezeug hat. An dem Gestell 18 ist ein erster Zylinder 20 befestigt, dessen Kolben 21 über eine Kolbenstange 22 mit einem zweiten Zylinder 23 verbunden ist. An diesem zweiten Zylinder 23 ist eine Hülse 24 zur Aufnahme des Stiftes 1 und einer auf das abgerundete Ende 14 des Stiftes 1 aufsetzbaren und in der Hülse 24 verschiebbaren Haube 25 befestigt. Die Haube 25, die am Widerlager 24c ansteht, dient zum Einführen des Stiftes 1 in die Sacklochbohrung 15 und hat eine konzentrische Bohrung 25a, durch die der im Stift 1 angeordnete Dorn 9 hindurchgeführt ist. Der Stift 1 wird in der Hülse 24 über einen O-Ring 24a an einem Innenflansch 24b gehalten. Der Dorn 9 ist mit einer Kolbenstange 26 eines im zweiten Zylinders 23 angeordneten Kolbens 27 in kraftschlüssige Verbindung gebracht.

Auf einer Arbeitsbühne eines Reaktorgebäudes wird der als Zentrierstift dienender Stift 1 aus Edelstahl in die Hülse 24 des Werkzeuges eingesetzt Dann wird das an einem Hebezeug hängende Werkzeug auf die Gitterplatte des Kerngerüstes. die sich unter Wasser befindet, abgesenkt und zentriert. Ein Hydraulikspeicher 28 ist über eine Steuereinrichtung 29 durch Hydraulikleitungen mit den Spannelementen 17 und den Zylindern 20 und 23 verbunden. Von der Steuereinrichtung 29 aus werden zunächst die Spannelemente 17 betätigt, so daß das Werkzeug über die Zentrierplatte 16 an der als Gitterplatte ausgebildeten Platte 12 verspannt wird. Dann wird über die Steuereinrichtung 29 der Kolben 21 im Zylinder 20 betätigt, so daß der Stift 1 vorgeschoben und in die Sacklochbohrung 15 eingeführt wird. Danach wird durch Betätigen des Kolbens 27 im Zylinder 23 über den Dorn 9 der Keil 5 mit großer Kraft vorgeschoben, so daß die Flanken 3, 4 nach außen bewegt und deren Erhebungen 10 in den Werkstoff der Platte 12 gedrückt werden. Die Erhebungen 10 oder auch die Mantelflächen der Flanken 3, 4 sind mit einer gehärteten Beschichtung, insbesondere einer Detonationsbeschichtung versehen, um zumindest ein teilweises Eindringen der Erhebungen 10 in den Werkstoff der Platte 12 sicherzustellen.

Nach der Verankerung des Stiftes 1 wird durch Betätigen des Kolbens 21 der zweite Zylinder 23 mit der Hülse 24 zurückgezogen. Durch Lösen der Spannelemente 17 wird die Verspannung der Zentrierplatte 16 aufgehoben und das Werkzeug kann mittels des Hebezeuges wieder entfernt werden. Dabei ist durch einen Kopf 9a am freien Ende des Dorns 9 sichergestellt, daß beim Zurückziehen der Hülse 24 auch der Dorn 9 mitgenommen wird, so daß in der Platte 12 nur der einteilige Stift 1 mit dem Keil 5 in seiner verankerten Lage verbleibt.

**Ansprüche**

1. Stift, insbesondere Zentrierstift für Brennelemente, dessen eines Ende unter Bildung zweier Flanken (3, 4) mit einem quer zu seiner Längsachse verlaufenden, trapezförmigen Ausschnitt (2) versehen und in einer Bohrung einer Wand oder Platte (12) verankerbar ist, wobei im trapezförmigen Ausschnitt (2) ein Keil (5) angeordnet ist, welcher über einen Faltsteg (6) mit dem Stift (1) verbunden ist, und dem Keil (5) ein Dorn (9) zugeordnet ist, der in eine koaxiale Bohrung (8) des Stiftes (1) von dessen freiem Ende her einführbar ist, um mittels eines Werkzeuges über den Dorn (9) eine Kraft auf den Keil (5) im Sinne eines Ausstellens und Verankerns der Flanken (3, 4) in der Bohrung zu übertragen.

2. Stift nach Anspruch 1, bei dem der Keil (5) und der Faltsteg (6) aus dem Stift (1) herausgearbeitet sind.

3. Stift nach Anspruch 1 oder 2, bei dem die nicht parallelen Seiten (2b) des Trapezes über der Spitze des Keiles (5) um die Schnittbreite (s) parallel nach innen versetzt sind.

4. Stift nach Anspruch 1, bei dem die Flanken (3, 4) an der Mantelfläche Erhebungen (10) haben.

5. Stift nach einem der vorhergehenden Ansprüche, bei dem die Erhebungen (10) als radiale Rippen oder Noppen ausgebildet sind.

6. Stift nach einem der vorhergehenden Ansprüche, bei dem als Werkstoff Stahl dient und zumindest die Erhebungen (10) gehärtet sind.

7. Stift nach einem der vorhergehenden Ansprüche, bei dem als Werkstoff Edelstahl dient und die Erhebungen (10) oder auch die Mantelflächen der Flanken (3, 4) mit einer gehärteten Beschichtung, insbesondere Detonationsbeschichtung, versehen sind.

8. Stift nach einem der vorhergehenden Ansprüche, bei dem der Reibungswinkel des Keils (5) zumindest annähernd im Bereich der Selbsthemmung liegt.

9. Werkzeug zum Verankern des Stiftes nach einem der vorhergehenden Ansprüche, bei dem eine an der Platte oder Wand über Spannelemente (17) festklemmbare Zentrierplatte (16) mit einem Gestell (18) vorgesehen ist, an dem ein erster Zylinder (20) befestigt ist, dessen Kolben (21) über eine Kolbenstange (22) mit einem zweiten Zylinder (23) und einer daran angeordneten Hülse (24) zur Aufnahme des Stiftes (1) und einer auf das Stiftende (14) aufsetzbaren, in der Hülse (24) verschiebbaren Haube (25) verbunden ist, durch die der im Stift (1) angeordnete Dorn (9) hindurchgeführt und mit einer Kolbenstange (26) eines im zweiten Zylinder (23) angeordneten Kolbens (27) in kraftschlüssige Verbindung gebracht ist.

FIG 1

FIG 2

FIG 3

FIG 4

# EUROPÄISCHER RECHERCHENBERICHT

**Europäisches Patentamt**

Nummer der Anmeldung

EP 89 10 8518

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| Y | EP-A-0 302 260 (SIEMENS) <br> * Spalte 2, Zeilen 44-48; Figur 1 * <br> --- | 1 | G 21 C 5/06 <br> G 21 C 3/32 <br> F 16 B 13/12 |
| Y | FR-A-2 130 091 (PHILLIPS) <br> * Seite 4; Absatz 1; Figuren 1-4 * | 1 | |
| A | | 3,4,5,6,8 | |
| | --- | | |
| A | EP-A-0 282 411 (S.P.I.T.) <br> * Spalte 1, Zeilen 58-63; Spalte 2, Zeilen 1-21; Figuren 1-3 * <br> ----- | 2 | |

RECHERCHIERTE SACHGEBIETE (Int. Cl.5)

G 21 C 5/00
G 21 C 3/00
F 16 B 13/00

Der vorliegende Recherchenbericht wurde für alle Patentansprüche erstellt

| Recherchenort | Abschlußdatum der Recherche | Prüfer |
|---|---|---|
| DEN HAAG | 30-01-1990 | KAVCIC |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus andern Gründen angeführtes Dokument
................................................................
& : Mitglied der gleichen Patentfamilie, übereinstimmendes Dokument

EPO FORM 1503 03.82 (P0403)